Europäisches Patentamt

European Patent Office

Office européen des brevets

(11) Veröffentlichungsnummer: **0 157 297**
**B1**

(12) # EUROPÄISCHE PATENTSCHRIFT

(45) Veröffentlichungstag der Patentschrift:
01.06.88

(51) Int. Cl.⁴: **C 01 B 6/04**

(21) Anmeldenummer: **85103288.8**

(22) Anmeldetag: **21.03.85**

(54) **Verfahren zur Herstellung von Magnesiumhydrid.**

(30) Priorität: **23.03.84 DE 3410640**

(43) Veröffentlichungstag der Anmeldung:
**09.10.85 Patentblatt 85/41**

(45) Bekanntmachung des Hinweises auf die Patenterteilung:
**01.06.88 Patentblatt 88/22**

(84) Benannte Vertragsstaaten:
**AT BE CH DE FR GB IT LI LU NL**

(56) Entgegenhaltungen:
**EP - A - 0 003 564**
**EP - A - 0 090 926**
**DE - C - 862 004**

Die Akte enthält technische Angaben, die nach dem Eingang der Anmeldung eingereicht wurden und die nicht in dieser Patentschrift enthalten sind.

(73) Patentinhaber: **Studiengesellschaft Kohle mbH,**
**Kaiser-Wilhelm-Platz 1, D-4330 Mülheim/Ruhr (DE)**

(72) Erfinder: **Bogdanovic, Borislav, Prof. Dr.,**
**Kaiser-Wilhelm-Platz 1, D-4330 Mülheim/Ruhr (DE)**

(74) Vertreter: **von Kreisler, Alek, Dipl.-Chem. et al,**
**Deichmannhaus am Hauptbahnhof, D-5000 Köln 1 (DE)**

## Beschreibung

Bei der vorliegenden Erfindung handelt es sich um eine Verbesserung des in der Europäischen Patentschrift 0003564 beschriebenen katalytischen Verfahrens zur Herstellung von Magnesiumhydrid (MgH$_2$) aus Magnesium und Wasserstoff.

Nach der Europäischen Patentschrift 0003564 lässt sich ein hochreaktionsfähiges Magnesiumhydrid unter milden Bedingungen aus Magnesium und Wasserstoff herstellen, indem Magnesium in Gegenwart eines Katalysators, bestehend aus einem Halogenid eines Metalls der IV. bis VIII. Nebengruppe des periodischen Systems und einer magnesiumorganischen Verbindung bzw. eines Magnesiumhydrids sowie gegebenenfalls in Gegenwart eines polycyclischen Aromaten oder eines tertiären Amins umgesetzt wird. Für den speziellen Fall der Herstellung von THF-löslichen Hydridmagnesiumhalogeniden (HMgX, X = Cl, Br, J) anstelle von Magnesiumhydrid (MgH$_2$) werden nach diesem Verfahren bei der Umsetzung des Magnesiums, dessen Halogenide MgX$_2$ (X = Cl, Br, I), bevorzugt im stöchiometrischen Verhältnis, d.h. Mg : MgX$_2$ = 1:1 zugesetzt. Besonders aktive Katalysatoren zur Herstellung von Magnesiumhydrid bzw. von Hydridmagnesiumhalogeniden erhält man erfindungsgemäss durch Umsetzung von Magnesiumanthracen oder von Magnesium und Anthracen mit Chrom-, Titan- oder Eisenhalogeniden in Tetrahydrofuran. Typische Reaktionsbedingungen für die Hydrierung von Magnesium nach diesem Verfahren sind 60–70 °C und 5–8 bar Wasserstoffdruck.

In der EP-A-0090926 wird ein in bestimmten organischen Lösungsmitteln lösliches Magnesiumhydrid beschrieben, das durch Reaktion von Magnesiummetall, einer mindestens äquimolaren Menge von Magnesiumhalodeniden und einer Katalysatormischung hergestellt wurde, die aus einem Übergangsmetallhalogenid, einem kondensierten polycyclischen aromatischen Kohlenwasserstoff und einer weiteren metallorganischen Komponente besteht. Zur Herstellung derartiger Magnesiumhydride ist jedoch immer mindestens eine äquimolare Menge des Co-Katalysators Magnesiumhalogenid erforderlich.

Es wurde nun überraschenderweise gefunden, dass Magnesiumhalogenide (MgX$_2$ mit X = Cl, Br, I), die bei der Hydrierung von Magnesium zum Zwecke der Herstellung von Hydridmagnesiumhalogeniden in stöchiometrischen Mengen bezogen auf Magnesiummetall eingesetzt werden, als Katalysatoren bei der Herstellung von Magnesiumhydrid gemäss der Europäischen Patentschrift 0003564 hochwirksam sind, wenn sie in katalytischen Mengen, bezogen auf Magnesiummetall, eingesetzt werden. Die kokatalytische Wirkung von Magnesiumhalogeniden äussert sich darin, dass die Aktivität der in der Europäischen Patentschrift 0003564 beschriebenen Hydrierkatalysatoren für Magnesium drastisch erhöht wird, so dass unter den sonst gleichen Bedingungen die Reaktionszeit für die quantitative Hydrierung von Magnesium um einen Faktor von 5–10 verkürzt werden kann. Dadurch können bei der Herstellung von Magnesiumhydrid die Produktionskosten wesentlich gesenkt und die Raumzeitausbeuten bei der Produktion erhöht werden. Als Mass für die Erhöhung der Aktivität dient ausser den verbesserten Ausbeutezahlen die verfügbare Oberfläche des erzeugten Magnesiumhydrids.

Das vorliegende, in bezug auf die Europäische Patentschrift 0003564 verbesserte Verfahren zur Herstellung von Magnesiumhydrid besteht demnach darin, dass Magnesium in Gegenwart der Katalysatoren, bestehend aus einem Halogenid eines Metalls der IV. bis VIII. Nebengruppe des periodischen Systems, einer magnesiumorganischen Verbindung bzw. eines Magnesiumhydrids und eines Magnesiumhalogenids sowie gegebenenfalls in Gegenwart eines polycyclischen Aromaten oder eines tertiären Amins mit Wasserstoff umgesetzt wird, und ist dadurch gekennzeichnet, dass Magnesiumhalogenid (MgX$_2$ mit X = Cl, Br, J) in weniger als stöchiometrischen (katalytischen) Mengen, bezogen auf Magnesiummetall, eingesetzt wird.

Als bevorzugte Katalysatoren im Sinne des vorliegenden Verfahrens gelten Kombinationen aus Titan-, Chrom- oder Eisenhalogeniden, Magnesiumanthracen oder Magnesium und Anthracen und als Magnesiumhalogenid Magnesiumchlorid in THF.

Erfindungsgemäss können die Katalysatoren im Molverhältnis Mg:Übergangsmetall von 10$^4$ bis 50:1 eingesetzt werden, wobei das Molverhältnis Übergangsmetall zu magnesiumorganische Verbindung bzw. Magnesiumhydrid zu Magnesiumhalogenid von 0,1:1:2 bis 10:1:20 gewählt werden kann. Falls jedoch bei einem hohen Molverhältnis Mg:Übergangsmetall (wie z.B. 5·10$^2$:1) gearbeitet wird, kann das Molverhältnis Magnesiumhalogenid:Übergangsmetall auch höher als 20:1, wie z.B. 50 oder 100:1 gewählt werden.

Die Hydrierung des Magnesiums nach dem vorliegenden Verfahren kann im Temperaturbereich von 0 bis 150 °C und bei Wasserstoffdrucken von 1 bis 300 bar durchgeführt werden; bevorzgut werden jedoch Temperaturen von 20 bis 80 °C und Wasserstoffdrucke von 40 bis 140 bar.

Die Hydrierung des Magnesiums nach dem vorliegenden Verfahren und im Vergleich zu dem Verfahren gemäss der Europäischen Patentschrift 0003564 wird anhand der angeführten Beispiele 1–8 aufgezeigt, die jedoch in keiner Weise den Umfang der Erfindung einschränken. Für die quantitative Hydrierung des 50 mesh Magnesiumpulvers (durchschnittlicher Teilchendurchmesser: 0,3 mm) nach dem vorliegenden Verfahren benötigt man bei 60–64 °C und 60 bar Wasserstoffdruck und bei einem Molverhältnis Mg:Ti:Anthracen:MgCl$_2$ = 100:1:1:8,7 (Ti- bzw. Anthr.-Konzentration = 0,05 mol/1) 1,5–2 h (Beispiel 1). Wird dagegen unter den sonst gleichen Bedingungen nach dem Verfahren der Europäischen Patentschrift 0003564, d.h. ohne Zusatz katalytischer Mengen (MgCl$_2$, gearbeitet (Vergleichsversuch, Beispiel 1), so wird die vollständige Hydrierung des Magnesiums nach ca. 20 h erreicht. Wird bei der Hydrierung des Magnesiums nach dem vorliegenden Verfahren unter den gleichen Bedingungen wie im Beispiel 1, jedoch unter Einsatz von 270 mesh Magnesiumpulver (durchschnittlicher Teilchendurchmesser: 0,05 mm) gearbeitet (Beispiel 2), so verkürzt sich die Hydrierzeit auf 45 min. Bei Erhöhung des Wasserstoffdruckes von 60 auf 120 bar verkürzt sich bei der Hydrierzeit von 1,5–2 auf 1 h (Beispiel 1 bzw. 3). Wie aus dem Vergleich des Versuches des Beispiels 1 mit dem des Beispiels 4 hervorgeht, steigt die Hydriergeschwindigkeit bei der Erhöhung der Temperatur von 40 auf 60 °C an.

Die Eigenschaften des nach dem vorliegenden Verfahren erhältlichen Magnesiumhydrids sind – verglichen mit denen des gemäss der Europäischen Patentschrift 0003564 hergestellten Magnesiumhydrids – deutlich verbessert. Die nach der BET-Methode gemessene spezifische Oberfläche des Magnesiumhydrids, hergestellt gemäss dem Beispiel 1 bzw. 2 dieser Patentschrift beträgt 129,4 m$^2$/g im Vergleich zu 70–90 m$^2$/g des Magnesiumhydrids erhalten unter den analogen Bedingungen ohne Zusatz von Magnesiumhalogeniden. Das nach dem vorliegenden Verfahren herstellbare Magnesiumhydrid lässt sich daher bevorzugt für chemische Zwecke (Synthese von Magnesiumalkylen, Synthese von Metall- bzw. Elementhydriden, Herstellung von «aktivem Magnesium», Reduktions- bzw. Trocknungsmittel, Träger für heterogene Katalysatoren) und zum Zwecke der Wasserstoffspeicherung, -reinigung und -abtrennung einsetzen.

Sämtliche in den Beispielen beschriebenen Versuche wurden in einer Schutzatmosphäre von Argon durchgeführt.

Beispiel 1

48,6 g (2,0 mol) Magnesiumpulver (50 mesh, 0,3 mm) und 3,56 g (20,0 mmol) Anthracen wurden in einem 1-l-Kolben vorgelegt und 370 ml einer 0,47 molaren MgCl$_2$-Lösung in abs. THF (174 mmol; Anthracen:MgCl$_2$ = 1:8,7; MgCl$_2$-Lösung dargestellt aus Magnesiumpulver und 1,2-Dichlorethan in THF) und 0,3 ml Ethylbromid hinzugegeben. Nach 5–10 min Rühren nahm die Suspension eine tiefblaue Farbe an. Nach 15 min Rühren wurde die Suspension mit 6,7 g (20,0 mmol) TiCl$_4$·2 THF versetzt, wobei Wärmetönung und Farbumschlag dunkelbraun auftraten, und danach weitere 15 min bei Raumtemperatur gerührt. Die Suspension wurde in einen mit Flügelrührer, Thermofühler und Thermostatisierungseinrichtung ausgestatteten 1-l-Edelstahlautoklaven eingefüllt, der Autoklaveninhalt auf 45 °C erwärmt und Wasserstoff aus einem unter Druck stehenden und über einen Druckminderer verbundenem Vorratsgefäss bis auf einen Druck von 60 bar aufgepresst. Die Autoklavenaussentemperatur wurde auf 60 °C erhöht und der Autoklaveninhalt bei einer Rührgeschwindigkeit von 900 min$^{-1}$ und einem Wasserstoffdruck von 60 bar isobar hydriert. Während des Versuches wurde die Temperatur der Reaktionsmischung und die Wasserstoffaufnahme (gemessen anhand des Druckabfalls im Wasserstoffaufnahme (gemessen anhand des Druckabfalls im Wasserstoffvorratsgefäss) auf einem Zweikanalschreiber aufgezeichnet. Zu Beginn der Hydrierung stieg die Temperatur der Reaktionsmischung vorübergehend bis auf 64 °C an und sank im weiteren Verlauf der Hydrierung auf 60 °C; nach 1,5–2 h war der Hydriervorgang beendet und die Wasserstoffaufnahme quantitativ. Die MgH$_2$-Suspension wurde filtriert, der Filterkuchen zweimal mit THF und zweimal mit Pentan gewaschen und Magnesiumhydrid im Hochvakuum/20 °C getrocknet. Man erhielt 45,0 g MgH$_2$ der Zusammensetzung: Mg 82,5, H 7,1, C 2,8, Cl 2,2 und Ti 0,5%. Die spezifische Oberfläche des Magnesiumhydrid-Pulvers nach der BET-Methode gemessen betrug 129,4 m$^2$/g.

Anmerkung: Das Filtrat mit dem gelösten Katalysator (ohne Waschflüssigkeit) kann mit dem gleichen Ergebnis für die Hydrierung einer weiteren Mg-Charge verwendet werden. Nach zweimaliger Hydrierung lässt die Hydrieraktivität der Katalysatorlösung allerdings nach.

Ein Vergleichsversuch zur Hydrierung von Magnesium wurde analog und mit gleichen Stoffmengen, jedoch ohne Zustz von MgCl$_2$ (bekannt nach der Europäischen Patentschrift 0003564) durchgeführt. Die Hydrierung dauerte 20 h.

Beispiel 2

Der Versuch wurde analog und mit gleichen Stoffmengen wie im Beispiel 1, jedoch unter Verwendung von 270 mesh (0,05 mm) Magnesiumpulver durchgeführt. Der Hydriervorgang war in diesem Falle nach 45 min beendet. Erhalten wurde 44,8 g Magnesiumhydrid der Zusammensetzung Mg 81,8, H 7,3, C 5,2, Cl 4,5 und Ti 1,0% mit einer spezifischen Oberfläche von 129,4 m$^2$/g.

Beispiel 3

Der Versuch wurde analog und mit gleichen Stoffmengen wie im Beispiel 1, jedoch bei 120 bar Wasserstoffdruck durchgeführt. Die Dauer der Hydrierung betrug 1 h.

Beispiel 4

Der Versuch wurde analog und mit gleichen Stoffmengen wie im Beispiel 1, jedoch bei +40 °C (±2°) (anstatt bei 60–65 °C) durchgeführt. Der Hydriervorgang war nach 7 h beendet.

Beispiel 5

Der Versuch wurde analog und mit gleichen Stoffmengen wie im Beispiel 1 durchgeführt, jedoch die Konzentration von MgCl$_2$ in THF-Lösung auf 0,35 mol/l verringert (130 mmol MgCl$_2$; Anthr.:MgCl$_2$ = 1:6,5). Die Dauer der Hydrierung betrug 4,7 h.

Beispiel 6

Der Versuch wurde analog und mit gleichen Stoffmengen wie im Beispiel 1 durchgeführt, wobei jedoch die Konzentration von MgCl$_2$ in THF 0,27 mol/l betrug (100 mmol MgCl$_2$; Anthr.:MgCl$_2$ = 1:5). Der Hydriervorgang dauerte 7,5 h.

**Beispiel 7**

Der Versuch wurde analog und mit gleichen Stoffmengen wie im Beispiel 1 durchgeführt, jedoch CrCl$_3$ (3,2 g, 20,0 mmol) anstelle von TiCl$_4$·2 THF als Katalysatorkomponente verwendet. Die Dauer der Hydrierung betrug 2 h.

**Beispiel 8**

Der Versuch wurde analog und mit gleichen Stoffmengen wie im Beispiel 1 durchgeführt, jedoch MgBr$_2$ in einer Konzentration von 0,25 mol/l (90 mmol MgBr$_2$; Anthr.:MgBr$_2$ = 1:4,6) anstelle von MgCl als Katalysatorkomponente verwendet. Die Hydrierung dauerte 12 h.

**Beispiel 9**

55,5 g (2,2 mol) Magnesiumpulver (50 mesh, 0,3 mm) wurden in 370 ml abs. THF vorgelegt. Unter Rühren wurden innerhalb ½ h 16,4 ml (0,2 mol) 1,2-Dichlorethan zugetropft, wobei eine starke Ethylenentwicklung stattfand. Der Ansatz wurde 15 min gerührt, das gelöste Ethylen abgesaugt und die Suspension mit 3,50 g (20 mmol) Antracen versetzt. Nach 5–10 min Rühren färbte sich die Suspension dunkelblau, nach 15 min Rühren versetzte man sie mit 6,7 g (20 mmol) TiCl$_4$·2 THF und arbeitete wie im Beispiel 1 beschrieben weiter. Die Hydrierung dauerte 4 h. Die Ausbeute und die Eigenschaften des Magnesiumhydrids entsprechen denen des im Beispiel 1 beschriebenen.

**Beispiel 10**

Der Versuch wurde analog und mit gleichen Stoffmengen wie im Beispiel 1, jedoch bei 40 bar Wasserstoffdruck durchgeführt. Die Hydrierung dauerte 5,2 h.

**Beispiel 11**

Der Versuch wurde analog und mit gleichen Stoffmengen wie im Beispiel 1, jedoch bei 20 bar Wasserstoffdruck durchgeführt. Die Hydrierzeit betrug 9 h.

**Patentansprüche**

1. Verfahren zur Herstellung von Magnesiumhydrid durch Umsetzen von Magnesium in Gegenwart eines Katalysators, bestehend aus einem Halogenid eines Übergangsmetalls der IV. bis VIII. Nebengruppe des periodischen Systems, einer magnesiumorganischen Verbindung bzw. eines Magnesiumhydrids sowie gegebenenfalls in Gegenwart eines polycyclischen Aromaten oder eines tertiären Amins mit Wasserstoff, dadurch gekennzeichnet, dass Magnesiumhalogenid (MgX$_2$ mit X = Cl, Br, I) in weniger als stöchiometrischen Mengen, bezogen auf Magnesiummetall, eingesetzt wird.

2. Verfahren nach Anspruch 1, dadurch gekennzeichnet, dass das Magnesiumhalogenid in katalytischen Mengen eingesetzt wird.

3. Verfahren nach Ansprüchen 1 und 2, dadurch gekennzeichnet, dass als Magnesiumhalogenid Magnesiumchlorid MgCl$_2$ eingesetzt wird.

4. Verfahren nach Ansprüchen 1–3, dadurch gekennzeichnet, dass die Umsetzung in Gegenwart eines Lösungsmittels bevorzugt in Tetrahydrofuran durchgeführt wird.

5. Verfahren nach Ansprüchen 1–4, dadurch gekennzeichnet, dass bei Drücken von 1 bis 300 bar, bevorzugt von 40 bis 140 bar gearbeitet wird.

6. Verfahren nach Ansprüchen 1–4, dadurch gekennzeichnet, dass bei Temperaturen von 0 bis 150 °C, bevorzugt bei 20 bis 80 °C gearbeitet wird.

7. Verfahren nach Ansprüchen 1–6, dadurch gekennzeichnet, dass das Molverhältnis Mg:Übergangsmetall wie 10$^4$ bis 50:1 gewählt wird.

8. Verfahren nach Ansprüchen 1–7, dadurch gekennzeichnet, dass bei einem Molverhältnis Mg:Übergangsmetall von 200 bis 50:1 das Molverhältnis Übergangsmetall:magnesiumorganische Verbindung bzw. Magnesiumhydrid:Magnesiumhalogenid von 0,1:1:2 bis 10:1:20 gewählt wird.

9. Verfahren nach Ansprüchen 1–7, dadurch gekennzeichnet, dass bei einem Molverhältnis Mg:Übergangsmetall von 200:1 das Molverhältnis Übergangsmetall:magnesiumorganische Verbindung bzw. Magnesiumhydrid:Magnesiumhalogenid von <0,1:1:2 bis 5:1:2 gewählt wird.

10. Verfahren nach Ansprüchen 1–9, dadurch gekennzeichnet, dass als Übergangsmetallhalogenide Chrom-, Titan- bzw. Eisenhalogenide eingesetzt werden.

11. Verfahren nach Ansprüchen 1–10, dadurch gekennzeichnet, dass als magnesiumorganische Verbindung Magnesiumanthracen bzw. ein Magnesiumaddukt an ein alkyl- bzw. arylsubstituiertes Anthracen verwendet wird.

12. Verfahren nach Ansprüchen 1–11, dadurch gekennzeichnet, dass als polycyclische Aromaten Anthracen, alkyl- bzw. arylsubstituierte Anthracene, Acenaphthylen, Tetracen bzw. Benzanthracen eingesetzt werden.

13. Magnesiumhydrid mit einer Oberfläche von mindestens 100 m$^2$/g, dadurch gekennzeichnet, dass es nach einem Verfahren nach Ansprüchen 1–12 herstellbar ist.

**Claims**

1. A process for the production of magnesium hydride by reaction of magnesium with hydrogen in the presence of a catalyst consisting of a halide of a transition metal of the IVth to VIIIth secondary group of the periodic system, an organomagnesium compound or a magnesium hydride and optionally in the presence of a polycyclic aromatic compound or a tertiary amine, characterized in that magnesium halide (MgX$_2$ with X = Cl, Br, I) is used in less than stoichiometric quantities, based on magnesium metal.

2. A process as claimed in claim 1, characterized in that magnesium halide is used in catalytic quantities.

3. A process as claimed in claims 1 and 2, characterized in that magnesium chloride MgCl$_2$ is used as the magnesium halide.

4. A process as claimed in claims 1 to 3, characterized in that the reaction is carried out in the presence of a solvent, preferably tetrahydrofuran.

5. A process as claimed in claims 1 to 4, characterized in that the reaction is carried out under pressures of 1 to 300 bar and preferably under pressures of 40 to 140 bar.

6. A process as claimed in claims 1 to 5, characterized in that the reaction is carried out at temperatures of 0 to 150 °C and preferably at temperatures of 20 to 80 °C.

7. A process as claimed in claims 1 to 6, characterized in that the molar ratio of Mg to transition metal is $10^4$ to 50:1.

8. A process as claimed in claims 1 to 7, characterized in that, for a molar ratio of Mg to transition metal of 200 to 50:1, the molar ratio of transition metal to organomagnesium compound or magnesium hydride to magnesium halide is 0,1:1:2 to 10:1:20.

9. A process as claimed in claims 1 to 7, characterized in that, for a molar ratio of Mg to transition metal of 200:1, the molar ratio of transition metal to organomagnesium compound or magnesium hydride to magnesium halide is <0,1:1:2 to 5:1:2.

10. A process as claimed in claims 1 to 9, characterized in that chromium, titanium or iron halides are used as the transition metal halides.

11. A process as claimed in claims 1 to 10, characterized in that magnesium anthracene or a magnesium adduct with an alkyl- or aryl-substituted anthracene is used as the organo-magnesium compound.

12. A process as claimed in claims 1 to 11, characterized in that anthracene, alkyl- or aryl-substituted anthracenes, acenaphthylene, tetracene or benzanthrene are used as polycyclic aromatic compounds.

13. Magnesium hydride having a surface of at least 100 m²/g, characterized in that it is produced by the process claimed in claims 1 to 12.

## Revendications

1. Procédé de préparation d'hydride de magnésium par réaction du magnésium avec de l'hydrogène en présence d'un catalyseur constitué par un halogénure d'un métal de transition des IV à VIIIème sous-groupes de la Classification Périodique des éléments, un composé organo-magnésien, respectivement un hydrure de magnésium, ainsi qu'éventuellement en présence d'un hydrocarbure aromatique polycyclique ou d'une amine tertiaire, caractérisé en ce que l'halogénure de magnésium (MgX₂ avec X = Cl, Br, I) est mis en œuvre en des quantités inférieures à la stoechiométrie par rapport au magnésium métallique.

2. Procédé selon la revendication 1, caractérisé en ce que l'halogénure de magnésium est mis en œuvre en des quantités catalytiques.

3. Procédé selon les revendications 1 et 2, caractérisé en ce que le chlorure de magnésium MgCl₂ est utilisé comme halogénure de magnésium.

4. Procédé selon les revendications 1 à 3, caractérisé en ce que la réaction est conduite en présence d'un solvant, de préférence dans le tétrahydrofuranne.

5. Procédé selon les revendications 1 à 4, caractérisé en ce que l'on opère sous des pressions de 1 à 300 bars, de préférence de 40 à 140 bars.

6. Procédé selon les revendications 1 à 5, caractérisé en ce que l'on opère à des températures de 0 à 150 °C, de préférence de 20 à 80 °C.

7. Procédé selon les revendications de 1 à 6, caractérisé en ce que le rapport molaire Mg:métal de transition est choisi dans la gamme de $10^4$ à 50:1.

8. Procédé selon les revendications 1 à 7, caractérisé en ce que, avec un rapport molaire Mg:métal de transition de 200 à 50:1, le rapport molaire métal de transition:composé organo-magnésien, respectivement hydrure de magnésium:halogénure de magnésium est choisi dans la gamme de 0,1:1:2 à 10:1:20.

9. Procédé selon les revendications 1 à 7, caractérisé en ce que, avec un rapport molaire Mg:métal de transition de 200:1, le rapport molaire métal de transition:composé organo-magnésien, respectivement hydrure de magnésium:halogénure de magnésium est choisi dans la gamme de <0,1:1:2 à 5:1:2.

10. Procédé selon les revendications de 1 à 9, caractérisé en ce que des halogénures de chrome, de titane ou de fer sont utilisés comme halogénure de métaux de transition.

11. Procédé selon les revendications de 1 à 10, caractérisé en ce que de l'anthracène magnésium ou un produit d'addition de magnésium sur un anthracène substitué par un alkyle ou un aryle est utilisé comme composé organo-magnésien.

12. Procédé selon les revendications de 1 à 11, caractérisé en ce que de l'anthracène, des anthracènes substitués par un alkyle ou un aryle, de l'acénaphtène, du tétracène, respectivement du benzanthracène sont mis en œuvre en tant qu'hydrocarbures aromatiques polycycliques.

13. Hydrure de magnésium avec une surface d'au moins 100 m²/g, caractérisé en ce qu'il peut être préparé selon un procédé conforme aux revendications 1 à 12.